# EUROPÄISCHE PATENTSCHRIFT

(11) **EP 1 343 985 B1**
(45) Veröffentlichungstag und Bekanntmachung des Hinweises auf die Patenterteilung: **02.06.2004**
(21) Anmeldenummer: 01990515.7
(22) Anmeldetag: 06.12.2001
(51) Int. Cl.: F16H 25/22

(54) **GEWINDETRIEB ZUR UMWANDLUNG EINER ROTATIONSBEWEGUNG IN EINE TRANSLATIONSBEWEGUNG**
THREADED MECHANISM FOR TRANSLATING A ROTATIONAL MOVEMENT INTO A TRANSLATIONAL MOVEMENT
MECANISME FILETE POUR CONVERTIR UN MOUVEMENT DE ROTATION EN MOUVEMENT DE TRANSLATION

(30) Priorität: 23.12.2000 DE 10064908
(43) Veröffentlichungstag der Anmeldung: 17.09.2003
(73) Patentinhaber: INA-Schaeffler KG, 91074 Herzogenaurach (DE)
(72) Erfinder: ZERNICKEL, Alexander, 91074 Herzogenaurach (DE); KRAUS, Manfred, 91074 Herzogenaurach (DE)
(86) Internationale Anmeldenummer: PCT/EP2001/014313
(87) Internationale Veröffentlichungsnummer: WO 2002/052172

(56) Entgegenhaltungen:
- WO-A-01/44689
- DE-A- 1 908 103
- GB-A- 891 025

## Beschreibung

### Gebiet der Erfindung

Die Erfindung betrifft einen Gewindetrieb zur Umwandlung einer Rotationsbewegung in eine Translationsbewegung, mit einer Spindel, einer diese umgebenden Mutter und dazwischen angeordneten Wälzkörpern, welche in einer an der äußeren Oberfläche der Spindel ausgebildeten Gewindenut und in einer entsprechenden, an der inneren Oberfläche der Mutter ausgebildeten Gewindenut abrollbar angeordnet sind, wobei die Mutter mehrere profilierte Ringe enthält, welche in axialer Richtung der Spindel hintereinander angeordnet und gegenseitig aneinander abgestützt sind, und wobei die Gewindenut der Mutter von jeweils zwei benachbarten profilierten Ringen gebildet ist.

### Hintergrund der Erfindung

Aus dem Dokument EP 0 132 492 A1 ist ein mit Kugeln als Wälzkörper ausgeführtes Schraubgetriebe bekannt, bei welchem in einem hohlzylindrischen Mutternkörper für die Führung der Kugeln ein Profilring drehfest angeordnet ist. Dieser besteht aus im Querschnitt rinnenförmigem Stahlblechmaterial. Der Mutternkörper besteht aus Kunststoffmaterial oder einer metallischen Druckgußlegierung und die Befestigung des Profilringes darin ist beim Spritzen oder Gießen erfolgt. Daher ergeben sich für die als massiver Ring ausgeführte Mutter mit dem darin befestigten Profilring ein großes Radialmaß und große Toleranzen.

Ein großes Radialmaß mit großen Toleranzen hat auch ein Gewindetrieb der eingangs genannten Art, der in dem gattungsgemäßen Dokument DE 19 08 103 B2 offenbart ist. Die dort beschriebene Schraubenmutter ist als beidseitig abgebördelte Blechhülse ausgebildet, in der im Axialschnitt annähernd U-förmige Blechringe eingesetzt sind, die jeweils paarweise mit ihren Basisseiten aneinanderliegen. Jeweils ein Blechring weist einen Schenkel auf, der eine Laufbahn für Kugeln bildet. Ein gleichmäßiges Tragen aller Kugeln wird hier dadurch erreicht, dass die an den Kugeln anliegenden U-Schenkel jeweils zweier benachbarter Blechringe federn und damit einen Ausgleich von Fertigungstoleranzen ermöglichen. Durch die Verspannung der Kugeln ergibt sich allerdings eine hohe Reibung, da die Kugeln an drei Punkten abrollen und dadurch zu den Laufbahnen Schlupf haben.

Ein aus dem Dokument GB 891 025 bekannter Gewindetrieb mit einer Spindel und einer Mutter sowie als Kugeln ausgebildeten Wälzkörpern benötigt zusätzlich ein geschlossenes Ösenbauteil mit einer Rücklaufbahn für die Kugeln. Als Mutter ist hier ein Bauteil verwendet, welches die Spindel auf ihrem Umfang nur teilweise umgibt und daher nicht als profilierter Ring bezeichnet werden kann.

Aus dem Dokument WO 01 44 689 A ist ein Gewindetrieb mit Einsatzringen bekannt, welche zwar als profilierte Ringe ausgebildet sind, aber nicht allein die Mutter bilden. Hierfür ist ein zusätzliches hülsenförmiges Bauteil erforderlich, in welchem die Einsatzringe montiert und in ihrer Lage gehalten werden.

Der Erfindung liegt die Aufgabe zugrunde, einen kostengünstig herstellbaren Gewindetrieb anzugeben, der einen guten Wirkungsgrad und eine hohe Tragfähigkeit aufweist.

Diese Aufgabe wird durch die Merkmale des Anspruchs 1 gelöst. Die Ringe können beispielsweise miteinander verschweißt sein. Eine solche Befestigung kann eine stoffschlüssige, reibschtüssige oder formschlüssige Befestigung oder eine Kombination daraus sein. Auf diese Weise setzt sich die Mutter aus einzelnen Ringen zusammen, die form- und kraftschlüssig miteinander verbunden sind. Dabei ist es zur Erzielung einer ausreichenden Präzision, also zum Ausschalten von Fertigungstoleranzen vorgesehen, das Spaltmaß, welches den Abstand zwischen den beiden Ringen bildet, dadurch einzustellen, dass die Spindel und der Wälzkörpersatz oder ein Formwerkzeug mit einer bestimmten Axialkraft gegen einen der beiden Ringe gedrückt wird, bis ein präzises Funktionsmaß erreicht ist. Anschließend erfolgt. dann die Befestigung der Ringe aneinander. Durch eine solche Montage aller Ringe nacheinander werden diese so zu einem festen Mutternkörper verbunden, dass Fertigungstoleranzen überbrückt sind. Als Wälzkörper können z. B. Kugeln verwendet werden.

### Kurze Beschreibung der Zeichnung

Ausführungsbeispiele der Erfindung sind in der Zeichnung dargestellt und werden im Folgenden näher erläutert. Es zeigen
- Figur 1: einen erfindungsgemäßen, von einer Spindel, einer Mutter und Kugeln als Wälzkörper gebildeten Gewindetrieb im Längsschnitt;
- Figur 2: ein in einem Anschlussbauteil montiertes Längsende des Gewindetriebes nach Figur 1, wobei das Anschlußbauteil ein Werkzeug zur Positionierung von Ringen der Mutter ist;
- Figur 3: einen weiteren von einer Spindel, einer Mutter und Kugeln als Wälzkörper gebildeten Gewindetrieb in einem Teillängsschnitt.

### Ausführliche Beschreibung der Zeichnung

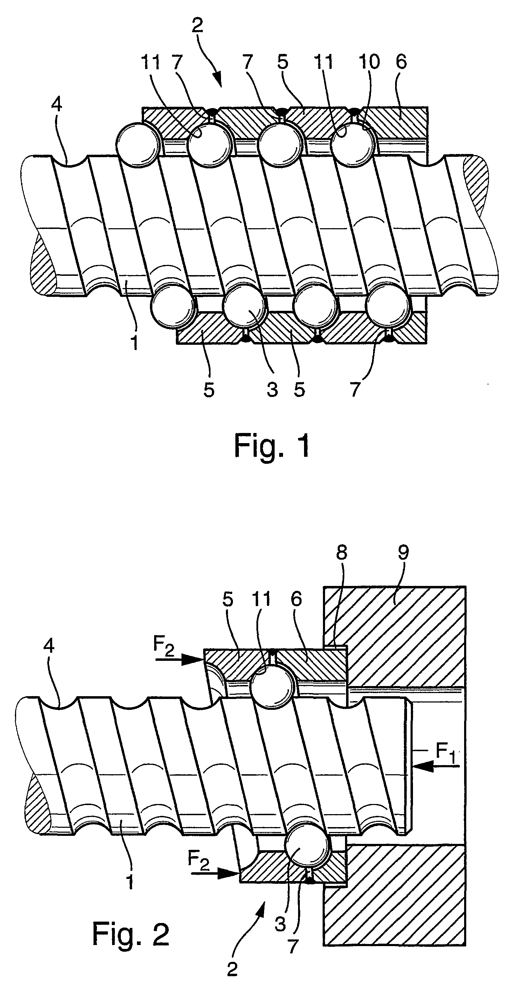

Ein in den Figuren 1 und 2 dargestellter erfindungsgemäßer Gewindetrieb besteht aus einer Spindel 1, einer Mutter 2, weiche die Spindel in einem radialen Abstand umgibt, und als Wälzkörper wirkende Kugeln 3, welche zwischen der Spindel 1 und der Mutter 2 in einer Gewindenut 4 der Spindel 1 und in einer entsprechenden Gewindenut der Mutter 2 abrollbar angeordnet sind. Die Mutter 2 ist von mehreren profilierten Ringen 5 und 6 gebildet, die in Achsrichtung der Spindel 1 aufeinander folgen. Zwei benachbarte Ringe 5, 5 bzw. 5, 6 halten jeweils zueinander einen axialen Spalt 7 ein und sind in den Bereichen ihrer äußeren Oberflächen stirnseitig miteinander verschweißt.

Der an einem Längsende der Mutter 2 befindliche Ring 6 ist für den Einbau in einem Aufnahmeraum 8 eines Anschlussbauteils 9 ausgebildet. Er weist an seiner Stirnseite, die von dem Anschlussbauteil 9 abgewandt ist und sich außerhalb des Aufnahmeraumes 8 erstreckt, eine führende Laufbahn 10 für die Kugeln 3 auf. Diese Laufbahn 10 des Ringes 6 bildet mit einer tragenden Laufbahn 11 des benachbarten Ringes 5 eine Windung der Gewindenut der Mutter 2, in welcher die Kugeln 3 an der Mutter 2 abrollen. Wie Figur 1 zeigt, weist der Ring 5 an seiner von dem Ring 6 abgewandten Stirnseite eine führende Laufbahn 10 auf, die wiederum mit einer tragenden Laufbahn des nächsten Ringes 5 der Mutter 2 eine Windung der Gewindenut der Mutter bildet.

Zur Befüllung des von der Gewindenut 4 der Spindel 1 und von der entsprechenden Gewindenut der Mutter 2 gebildeten Laufbahnraumes für die Kugeln 3 kann die Mutter 2 eine Öffnung enthalten, die später, nach der Befüllung, geschlossen wird.

In Figur 2 ist die tragende Laufbahn 11 des Ringes 5 eine zu der Spindel 1 exakt ausgerichtete Laufbahn, die hohe Kräfte aus der Hauptlastrichtung aufnehmen und übertragen kann. Der andere Ring 6 übernimmt bei der dargestellten Ausführung im Wesentlichen eine Führungsfunktion für die Kugeln 3. Zwischen den beiden Ringen 5 und 6 ist im Laufbahnbereich ein ausreichend großes Spiel für ein sauberes Abrollen der Kugeln 3 vorgesehen.

Zur Herstellung des exakten Kugelkontaktes im Bereich des Ringes 5 kann beispielsweise folgendes Verfahren durchgeführt werden: Der Ring 6 wird in den Aufnahmeraum 8 eingebaut. Die Kugeln 3 und die Spindel 1 werden eingefügt. Anstelle der Kugeln 3 und der Spindel 1 kann auch ein Formwerkzeug verwendet werden, welches eventuell aus keramischem Material besteht. Dann wird der Ring 5 eingesetzt und mit einer Kraft gegen die Kugeln 3 gedrückt, die ein exaktes Ausrichten des Ringes 5 bewirkt. Dabei wirkt an dem Ring 5 die axiale Kraft F₂ und an der Spindel 1 die axiale Reaktionskraft F₁. Bei Bedarf kann die Spindel 1 bei diesem Ausrichten um ihre Achse gedreht werden. Nun werden die beiden Ringe 5 und 6 in dem Bereich des von ihnen gebildeten Spaltes 7 miteinander verschweißt oder nach einem anderen geeigneten Verfahren aneinander befestigt. Anschließend wird der nächste Ring 5 auf die gleiche Weise montiert.

Ein Vorteil der erfindungsgemäßen Lösung besteht darin, dass an einem Ring zwei Laufbahnen ausgebildet werden können, nämlich die tragende Laufbahn 11 und die führende Laufbahn 10. Allerdings kann nur eine Laufbahn des selben Ringes präzise ausgerichtet werden.

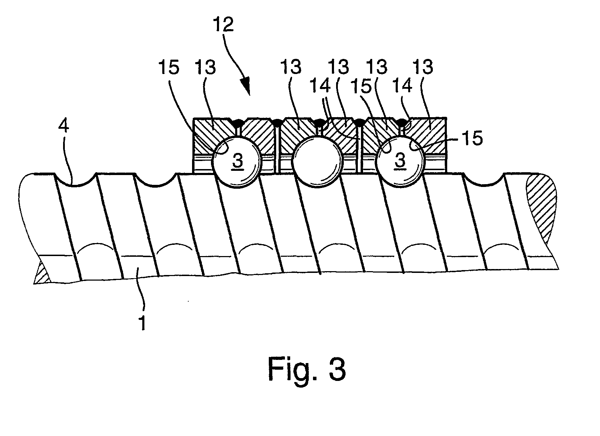

In Figur 3 ist ein weiterer erfindungsgemäßer Gewindetrieb dargestellt, bei dem die Mutter 12 aus drei Paaren von profilierten Ringen 13 aufgebaut ist. Jedes Paar zweier Ringe 13 bildet eine geschlossene Einheit und kann gegen die Kugeln 3 gedrückt bzw. mit einem definierten Spalt positioniert werden. In der dadurch erzeugten präzisen Lage der Ringe 13 werden diese durch Verschweißen in den Bereichen ihrer Spalte 14 zu der Mutter 12 verbunden. Bei dem Montageprozess können auch Übermaß-/Untermaß-Kugeln aus keramischem Material als Hilfsmittel verwendet werden, um ein definiertes Spiel oder eine definierte Vorspannung der Kugeln 3 im Endzustand gegenüber ihren Laufbahnen 15 der Mutter 12 und der Gewindenut 4 der Spindel 1 zu erzeugen.

Es ist auch vorstellbar, die nach obigem Verfahren in ihrer Lage ausgerichteten und in einem Werkzeug gehaltenen Ringe mit einem Gewinde zu versehen, anschließend in eine Gewindehülse einzuschrauben und danach zur Erzeugung einer Verdrehsicherung im Bereich der Ringe durch Punktverschweißen aneinander zu befestigen oder zu verstemmen. Ferner ist es denkbar, die ausgerichteten Ringe mit einem entsprechend ausgelegten Werkzeug, welches die Ringe auf Abstand hält, in eine glatte Hülse einzubauen und anschließend durch Punktschweißen oder ein ähnliches Verfahren aneinander zu fixieren.

### Bezugszahlen

- 1: Spindel
- 2: Mutter
- 3: Kugel
- 4: Gewindenut
- 5: Ring
- 6: Ring
- 7: Spalt
- 8: Aufnahmeraum
- 9: Anschlussbauteil
- 10: führende Laufbahn
- 11: tragende Laufbahn
- 12: Mutter
- 13: Ring
- 14: Spalt
- 15: Laufbahn
- F₁: Reaktionskraft
- F₂: Kraft

## Patentansprüche

1. Gewindetrieb zur Umwandlung einer Rotationsbewegung in eine Translationsbewegung, mit einer Spindel (1), einer diese umgebenden Mutter (2, 12) und dazwischen angeordneten Wälzkörpern, welche in einer an der äußeren Oberfläche der Spindel (1) ausgebildeten Gewindenut (4) und in einer entsprechenden, an der inneren Oberfläche der Mutter (2, 12) ausgebildeten Gewindenut abrollbar angeordnet sind, wobei die Mutter (2, 12) mehrere profilierte Ringe (5, 6, 13) enthält, welche in axialer Richtung der Spindel (1) hintereinander angeordnet und gegenseitig aneinander abgestützt sind, und wobei die Gewindenut der Mutter (2, 12) von jeweils zwei benachbarten profilierten Ringen (5, 6, 13) gebildet ist, **dadurch gekennzeichnet, dass** die Mutter (2, 12) ausschließlich von den mehreren profilierten, in Achsrichtung der Spindel (1) aufeinander folgenden Ringen (5, 6, 13) gebildet ist, wobei jeweils die beiden benachbarten Ringe (5, 6, 13) unter Einhaltung eines Spaltes (7, 14) aneinander befestigt sind.

2. Gewindetrieb nach Anspruch 1, **dadurch gekennzeichnet, dass** die beiden Ringe (5, 6, 13) miteinander verschweißt sind.

3. Gewindetrieb nach Anspruch 1, **dadurch gekennzeichnet, dass** als Wälzkörper Kugeln (3) verwendet sind.

4. Gewindetrieb nach Anspruch 1, **dadurch gekennzeichnet, dass** von den beiden benachbarten Ringen (5, 6) zur Begrenzung der Gewindenut der Mutter (2) ein Ring (5) eine tragende Laufbahn (11) und der andere Ring (6) eine führende Laufbahn (10) für die Wälzkörper aufweist.

5. Gewindetrieb nach Anspruch 4, **dadurch gekennzeichnet, dass** die Mutter (2) mindestens einen profilierten Ring (5) enthält, welcher an einer Stirnseite eine tragende Laufbahn (11) und an der anderen Stirnseite eine führende Laufbahn (10) aufweist.

6. Gewindetrieb nach Anspruch 1, **dadurch gekennzeichnet, dass** ein Längsende der Mutter (2) von einem profilierten Ring (6) gebildet ist, welcher an einer Stirnseite eine führende Laufbahn (10) aufweist und mit der anderen Stirnseite in einem Aufnahmeraum (8) eines Anschlussbauteils (9) montiert ist.

7. Gewindetrieb nach Anspruch 1, **dadurch gekennzeichnet, dass** mehrere Paare benachbarter Ringe (13) gebildet und in axialer Richtung der Spindel (1) hintereinander angeordnet sind, wobei jeweils zwei benachbarte Paare unter Einhaltung eines Spaltes (14) aneinander befestigt sind.

8. Gewindetrieb nach Anspruch 1, **dadurch gekennzeichnet, dass** die profilierten Ringe (5, 6, 13) spanlos hergestellte Bauteile sind.

## Claims

1. Screw drive for transforming a rotational motion into a translational motion, said drive comprising a spindle (1), a nut (2, 12) surrounding this, and rolling elements arranged therebetween for rolling in a thread groove (4) configured on the outer surface of the spindle (1) and in a corresponding thread groove configured on the inner surface of the nut (2, 12), the nut (2, 12) comprising a plurality of profiled rings (5, 6, 13) that are arranged behind one another in axial direction of the spindle (1) while being supported on one another, the thread groove of the nut (2, 12) being formed, in each case, by two adjacent profiled rings (5, 6, 13), **characterised in that** the nut (2, 12) is formed exclusively by the plurality of profiled rings (5, 6, 13) arranged behind one another in axial direction of the spindle (1), and every two adjacent rings (5, 6, 13) are fixed to each other leaving a gap (7, 14) therebetween.

2. Screw drive according to claim 1, **characterised in that** the two rings (5, 6, 13) are welded to each other.

3. Screw drive according to claim 1, **characterised in that** balls (3) are used as rolling elements.

4. Screw drive according to claim 1, **characterised in that**, for defining the thread groove of the nut (2), one (5) of the two adjacent rings (5, 6) comprises a supporting raceway (11) and the other (6) of the two adjacent rings (5, 6) comprises a guiding raceway (10) for the rolling elements.

5. Screw drive according to claim 4, **characterised in that** the nut (2) contains at least one profiled ring (5) which comprises a supporting raceway (11) on one front end and a guiding raceway (10) on the other front end.

6. Screw drive according to claim 1, **characterised in that** one longitudinal end of the nut (2) is formed by a profiled ring (6) that comprises a guiding raceway (10) on one front end and is mounted with the other front end in a reception space (8) of a connecting component (9).

7. Screw drive according to claim 1, **characterised in that** several pairs of adjacent rings (13) are formed and arranged behind one another in axial direction of the spindle (1), and every two adjacent pairs are fixed to each other leaving a gap (14) therebetween.

8. Screw drive according to claim 1, **characterised in that** the profiled rings (5, 6, 13) are made without chip removal.

## Revendications

1. Commande par vis pour la transformation d'un mouvement de rotation en un mouvement de translation, ladite commande comprenant une broche (1), un écrou (2, 12) qui entoure cette broche (1) et, entre ces deux, des corps roulants qui sont agencés pour rouler dans une gorge de filet (4) configurée sur la surface externe de la broche (1) et dans une gorge de filet configurée sur la surface interne de l'écrou (2, 12), cet écrou (2, 12) comprenant plusieurs anneaux profilés (5, 6, 13) qui sont agencés, l'un derrière l'autre, dans la direction axiale de la broche (1) en étant supportés, l'un contre l'autre, la gorge de filet de l'écrou (2, 12) étant formée, à chaque fois, par deux anneaux profilés (5, 6, 13) adjacents, **caractérisée en ce que** l'écrou (2, 12) est formé exclusivement par les plusieurs anneaux profilés (5, 6, 13) qui sont agencés, l'un derrière l'autre, dans la direction axiale de la broche (1), deux anneaux adjacents (5, 6, 13) étant fixés, à chaque fois, l'un à l'autre, en formant un intervalle (7, 14).

2. Commande par vis selon la revendication 1, **caractérisée en ce que** les deux anneaux (5, 6, 13) sont soudés, l'un à l'autre.

3. Commande par vis selon la revendication 1, **caractérisée en ce que** des billes (3) sont utilisées en tant que corps roulants.

4. Commande par vis selon la revendication 1, **caractérisée en ce que** l'un (5) des deux anneaux (5, 6) adjacents qui délimitent la gorge de filet de l'écrou (2) comprend une piste de support (11) et l'autre anneau (6) comprend une piste de guidage (10) pour les corps roulants.

5. Commande par vis selon la revendication 4, **caractérisée en ce que** l'écrou (2) comporte au moins un anneau profilé (5) qui comprend, sur l'un de ses côtés frontaux, une piste de support (11), et sur l'autre côté frontal, une piste de guidage (10).

6. Commande par vis selon la revendication 1, **caractérisé en ce que** l'une des extrémités longitudinales de l'écrou (2) est formée par un anneau profilé (6) qui comprend, sur l'un de ses côtés frontaux, une piste de guidage (10) en étant monté, avec son autre côté frontal, dans un espace de réception (8) d'un composant de raccordement (9).

7. Commande par vis selon la revendication 1, **caractérisée en ce que** plusieurs paires d'anneaux adjacents (13) sont formées et agencées, l'une derrière l'autre, dans la direction axiale de la broche (1), deux paires adjacentes étant fixées, à chaque fois, l'une à l'autre, en formant un intervalle (14).

8. Commande par vis selon la revendication 1, **caractérisée en ce que** les anneaux profilés (5, 6 13) sont faits sans enlèvement de copeaux.
